(19) Europäisches Patentamt
European Patent Office
Office européen des brevets

(11) EP 0 872 740 A1

(12) DEMANDE DE BREVET EUROPEEN

(43) Date de publication:
21.10.1998 Bulletin 1998/43

(51) Int Cl.6: G01S 13/34, G01S 7/40

(21) Numéro de dépôt: 98400914.2

(22) Date de dépôt: 14.04.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 18.04.1997 FR 9704830

(71) Demandeur: THOMSON-CSF
75008 Paris (FR)

(72) Inventeurs:
• Artis, Jean-Paul
  94117 Arcueil Cedex (FR)
• Dousset, Thierry
  94117 Arcueil Cedex (FR)
• Melero, Francisco
  94117 Arcueil Cedex (FR)

(54) Dispositif d'auto-test de la chaîne d'émission et de réception d'un radar notamment pour automobile

(57) La présente invention concerne un dispositif d'auto-test de la chaîne d'émission et de réception d'un radar.

Le dispositif comporte au moins un transducteur (1) inséré dans le champ de rayonnement de l'émission hyperfréquence (2) qui intercepte une partie de l'énergie rayonnée et la renvoie vers le récepteur de façon à créer dans un signal modulé par les battements du transducteur (1), utilisé comme signal de test.

Application : notamment radars pour véhicules automobiles.

FIG.1

Printed by Jouve, 75001 PARIS (FR)

**Description**

La présente invention concerne un dispositif d'auto-test de la chaîne d'émission et de réception d'un radar. Elle s'applique notamment à des radars équipant des véhicules automobiles. Plus généralement, elle s'applique à des radars nécessitant une production à faible coût.

Plusieurs types de radars peuvent équiper des véhicules automobiles. Parmi ceux-ci sont connus les radars dits du type ACC selon l'expression anglo-saxonne "Automotive Cruise Control". Un radar de ce type est destiné à permettre la régulation de l'allure des véhicules automobiles. Il détecte et localise le plus proche véhicule situé dans la voie du porteur. Les informations transmises au calculateur du véhicule porteur permettent par exemple au calculateur d'agir, via des interfaces appropriées, sur le contrôle du moteur de façon à réguler la distance séparant le véhicule porteur de son prédécesseur. Dans ce cas, le conducteur n'a donc pas à agir sur les commandes de contrôle longitudinal telles que par exemple l'accélérateur, les freins ou le levier de vitesse. Etant donnée l'importance vitale du contrôle de ces commandes, une analyse de sûreté de fonctionnement de l'ensemble du système montre le caractère indispensable d'une fonction d'auto-test performante permettant de détecter rapidement une variation des caractéristiques du radar.

Un radar de régulation de vitesse pour véhicules automobiles peut par exemple fonctionner avec une émission présentant des sauts de fréquences. Le radar émet alors une suite d'impulsions à des fréquences différentes, l'exploitation des phases résultantes permettent de calculer la distance D selon la relation suivante, dans un exemple d'utilisation de deux fréquences :

$$D = \frac{c.\Delta\varphi}{4\pi.\Delta F} \qquad (1)$$

où c, $\Delta F$, $\Delta\varphi$, représentent respectivement la vitesse de la lumière, l'écart de fréquence des ondes émises et l'écart de phase des signaux reçus d'une même cible relativement à chaque fréquence.

En pratique on peut utiliser un nombre supérieur de fréquences. Le calcul de la distance est alors par exemple issu d'une combinaison linéaire de calculs élémentaires selon la relation (1) précédente. Il apparaît dans ces cas que la mesure de la distance est inversement proportionnelle à l'écart de fréquence entre deux ondes émises. Dans l'état actuel de la technologie hyperfréquence en bande W, c'est-à-dire entre 76 GHz et 77 GHz, cet écart est une grandeur délicate à maîtriser. Une vérification pendant le fonctionnement du radar s'avère donc indispensable eu égard à l'importance vitale de la fiabilité des informations influant le contrôle de la vitesse d'un véhicule automobile.

Les méthodes pour réaliser l'auto-test de radars utilisent généralement des circuits de mesure des caractéristiques d'émission hyperfréquence et des circuits d'injection de signaux calibrés sur les voies de réception. Ces circuits nécessitent des fonctions hyperfréquence qui, particulièrement en bande W, sont coûteux, délicats à mettre en oeuvre et susceptibles de par leur présence d'induire des baisses significatives de performances des fonctions principales. Ces méthodes d'auto-test ne sont donc pas compatibles de matériels devant être produit en grande série et à faible coût.

Le but de l'invention est de pallier les inconvénients précités, notamment de permettre la réalisation d'un auto-test peu coûteux à mettre en oeuvre.

A cet effet, l'invention a pour objet un dispositif d'auto-test d'un radar, caractérisé en ce qu'il comporte au moins un transducteur inséré dans le champ de rayonnement de l'émission hyperfréquence qui intercepte une partie de l'énergie rayonnée et la renvoie vers le récepteur de façon à créer après démodulation un signal de test dont les caractéristiques reflètent les mouvements du transducteur.

L'invention a pour principaux avantages qu'elle est peu encombrante, qu'elle s'adapte particulièrement bien à des radars pour automobiles mais aussi à tous les types de radars à émission continue, qu'elle ne perturbe pas significativement les performances des fonctions principales du radar, qu'elle convient à des productions de grande série et qu'elle est simple à mettre en oeuvre.

D'autres caractéristiques et avantages de l'invention apparaîtront à l'aide de la description qui suit faite en regard de dessins annexés qui représentent :

- la figure 1, un synoptique d'un mode de réalisation possible d'un dispositif selon l'invention ;
- la figure 2, une illustration de la génération d'un signal d'auto-test produit selon l'invention ;
- les figures 3, 4 et 5 des exemples de positionnement d'un transducteur utilisé dans un dispositif selon l'invention.

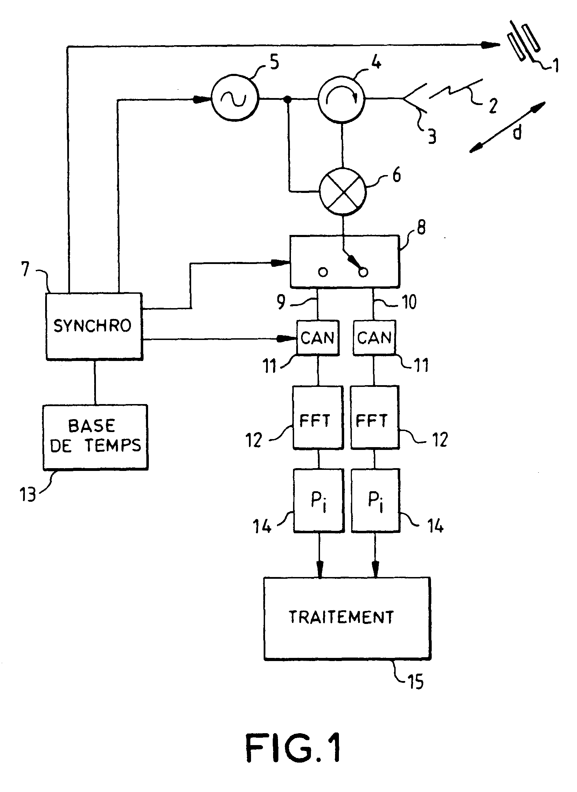

La figure 1 présente par un synoptique un mode de réalisation possible d'un dispositif selon l'invention. Le radar étant par exemple du type monopulse, seule la voie somme est représentée pour la compréhension du dispositif. Ce dernier comporte un transducteur 1 muni d'une surface métallique et inséré dans le champ de rayonnement de l'émission hyperfréquence 2 de telle façon que sa surface intercepte une partie de l'énergie rayonnée par l'émission et la renvoie vers la partie réception du radar. Le type de transducteur utilisé a notamment une fréquence de fonctionnement adaptée à l'application de l'invention, c'est par exemple un transducteur sonore. Ce dernier est par exemple du type piézo-électrique ou électromagnétique.

Selon la figure 1 l'émission hyperfréquence 2 est par exemple rayonnée par une source 3, par exemple le cornet d'une antenne. A l'émission, un oscillateur hyperfréquence 5 fournit le signal d'émission, via un circulateur 4 et des moyens d'amplification non représentés, à la source d'émission 3. L'oscillateur hyperfréquence 5 faisant par exemple par ailleurs fonction d'oscillateur local pour la réception dans le cas d'utilisation d'un récepteur de type homodyne, sa sortie est aussi reliée à une première entrée d'un mélangeur hyperfréquence 6, l'autre entrée de ce dernier recevant du circulateur 4 les signaux de réception venant de l'antenne 3.

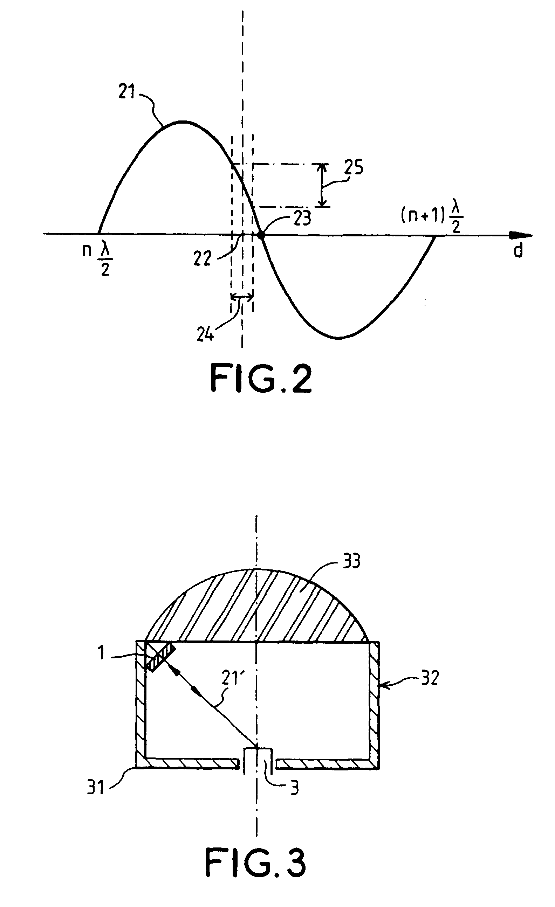

La figure 2 illustre l'allure d'un signal généré au niveau du mélangeur 6 d'un récepteur et issu des débattements du transducteur 1. De la combinaison dans le mélangeur 6 de l'onde réfléchie par le transducteur 1 et de l'onde provenant de l'oscillateur hyperfréquence 5 résulte un signal modulé par les débattements du transducteur, ce signal modulé étant selon l'invention utilisé comme signal de test. Ces débattements sont en fait les déplacements mécaniques de la surface métallique du transducteur sur laquelle se réfléchit l'onde émise. La figure 2 présente une courbe sinusoïdale 21 représentative de l'amplitude du signal en sortie du mélangeur 6 en fonction des évolutions de la distance d entre le transducteur 1 et l'antenne 3. La courbe sinusoïdale 21 est donnée pour une distance d comprise entre nλ/2 et (n+1)λ/2, n étant un nombre entier positif. La position du transducteur 1 est par exemple déterminée pour que les positions 22 des récepteurs des voies somme et différence soient proches d'une annulation 23 de l'amplitude du signal représentée par la courbe 21 précitée, ce qui correspond au fait que chaque récepteur foumisse un signal de test dont la valeur moyenne est voisine de zéro. En effet le déplacement mécanique 24 de la surface métallique du transducteur 1 produit au niveau du récepteur le signal de test 25 précité qui est l'image du déplacement 24. Pour un déplacement donné, l'amplitude du signal de test généré 25 est d'autant plus grande que le récepteur est proche d'une annulation 23 car c'est là que la pente de la courbe 21 est la plus importante. La distance d entre le transducteur 1 et l'antenne 3 du radar doit être voisine de $\frac{\lambda}{8}$, module $\frac{\lambda}{4}$, pour que le signal de test ait une valeur moyenne voisine de zéro, λ étant la longueur d'onde du signal hyperfréquence.

On suppose que les autres parcours des ondes hyperfréquences à l'intérieur du radar sont égaux, modulo $\frac{\lambda}{4}$, c'est-à-dire le parcours entre l'oscillateur 5 et l'antenne 3, puis l'antenne 3 et le mélangeur 6 d'une part, et d'autre part le parcours direct entre l'oscillateur 5 et le mélangeur 6.

Si ce n'est pas le cas, il faut par exemple modifier la position du transducteur d'une quantité égale à la différence des parcours, modulo $\frac{\lambda}{4}$, pour retrouver les conditions décrites ci-dessus.

Le transducteur 1 est par exemple relié à des moyens de synchronisation 7 qui commandent par ailleurs l'échantillonnage des signaux reçus. L'émission étant par exemple à saut de fréquence, les moyens de synchronisation 7 commandent les changements de fréquences de l'oscillateur hyperfréquence 5. Ils commandent aussi des moyens 8 de commutation du signal reçu d'une voie de réception 9 à l'autre 10. Chaque voie de réception est affectée à une fréquence d'émission, c'est-à-dire qu'une voie est ouverte seulement lorsque sa fréquence associée est émise. Les moyens de synchronisation 7 commandent par exemple aussi des convertisseurs analogique-numérique 11 placés à l'entrée de chaque voie 9, 10. Ces derniers effectuent par exemple à la fois la conversion numérique des signaux reçus et leur échantillonnage. Les convertisseurs analogique-numérique 11 fournissent par exemple les signaux échantillonnés et numérisés à des moyens 12 de transformation de Fourier rapide.

Le transducteur 1 est excité par les circuits du radar en synchronisme avec un sous-multiple de la fréquence d'échantillonnage des signaux de réception. Plus précisément, si Fe représente la fréquence d'échantillonnage d'un signal de réception, si N représente le nombre de points d'analyse du signal par transformée de Fourier rapide 12, et si Ft représente la fréquence d'excitation du transducteur, cette dernière est donnée par la relation suivante :

$$Ft = n.Fe/N \qquad (2)$$

n étant un entier inférieur ou égal à N choisi par exemple en fonction de considérations technologiques dont notamment la fréquence propre du transducteur. Les composantes de gain et de phase du signal de test 25 généré ne dépendent alors que de la constitution du circuit, c'est-à-dire notamment du transducteur, du circuit d'excitation et de la position du transducteur, et sont constants à la différence du signal issu d'une cible, où par exemple le module est peu variable et la phase continûment variable, ou du bruit, où le module et la phase sont variables. Après traitement par transformée de Fourier rapide par exemple, une moyenne des signaux de test est effectuée sur un nombre donné de récurrences d'émission radar. Les résultats deviennent indépendants de l'environnement extérieur, c'est-à-dire notamment de la présence de cibles ou de clutter par exemple, cette opération de moyenne correspondant en fait à une post-intégration du signal. Il y a donc une modulation du signal de test détecté dont la fréquence et donc la position spectrale par analyse de transformée de Fourier rapide sont parfaitement connues et indépendantes de l'environnement extérieur. Un traitement spécifique de la raie Doppler obtenue permet de déterminer différents paramètres propres à la chaîne d'émission/réception du radar, ces paramètres concernent par exemple les chaînes de mesures d'écartométrie ou de distance. Le transducteur est excité selon la fréquence Ft définie par la relation (2) de façon à moduler le signal de test avec une séquence connue, synchrone de la récurrence d'analyse d'un signal de réception, puis le signal reçu est démodulé par rapport à cette séquence et une moyenne est effectuée sur un nombre donné de récurrences.

La figure 1 montre que les moyens de synchronisation 7 sont par exemple reliés à une base de temps de référence 13. Ils commandent l'excitation du transducteur 1 selon un sous-multiple de la fréquence à laquelle ils commandent les convertisseurs analogique-numérique 11 pour l'échantillonnage des signaux. Les sorties des moyens 12 de calcul de transformée de Fourier rapide sont par exemple reliées à des moyens de post-intégration 14 qui effectuent notamment une moyenne des signaux détectés sur un nombre donné de récurrences d'analyse radar, ce nombre étant de préférence élevé. Ces moyens 14 fournissent leur résultat par exemple aux moyens 15 de traitement radar qui pourront analyser les signaux de test et ainsi déterminer certains paramètres pour réaliser un auto-test de la chaîne d'émission et de réception du radar.

Les tests suivants possibles sont donnés à titre d'exemple et ne sont pas exhaustifs, ils sont par exemple effectués à partir des signaux de test ou à partir des données obtenues après traitement par les moyens de post-intégration 14. Un test de la valeur moyenne du module du signal présent dans une case Doppler sélectionnée peut être effectué. Le signal de test étant proportionnel à la puissance émise et au gain connu de réception, le test permet de conclure qu'à amplitude donnée émise, la chaîne d'émission et de réception fonctionne ou pas. Un autre test possible peut concerner la vérification d'un écart de deux fréquences notamment dans le cas où cet écart est utilisé pour mesurer une distance selon la relation (1) précédente par exemple. Pour ce test la connaissance de la distance du récepteur au transducteur 1 est utilisée. Cette distance est très faible par rapport aux distances des cibles mesurées, elle est par exemple de l'ordre de quelques centimètres. Le test mesure la distance du transducteur au récepteur. Pour obtenir une bonne précision, la distance est calculée à partir des valeurs moyennes sur un grand nombre d'échantillons des signaux reçus sur chaque voie de fréquence. L'écart de fréquence est déduit du calcul par connaissance de la distance D du transducteur au récepteur, les autres composantes de la relation (1) étant par ailleurs connues et constants. En ce qui concerne le déphasage $\Delta\varphi$ qui représente le déphasage entre deux signaux de test reçus relativement à chaque fréquence, celui-ci est aussi constant comme il a été vu précédemment.

La figure 3 montre un exemple de positionnement du transducteur 1 dans le champ de rayonnement du radar. Le transducteur est placé dans l'antenne 31 du radar. Celle-ci comporte une source d'émission ou comet 3. La source d'émission 3 étant à l'entrée d'un cylindre métallique 32 ouvert par exemple sur le coté opposé sur une lentille 33, le transducteur est par exemple placé le plus près possible de l'enveloppe intérieure du cylindre 32 de façon à ne pas perturber sensiblement le rayonnement d'antenne mais de façon aussi à ce que la distance 21' entre le transducteur 1 et la source 3 soit voisine de $\frac{3}{8}$, modulo $\frac{1}{4}$, en supposant que les autres parcours des ondes hyperfréquences à l'intérieur du radar sont égaux, modulo $\frac{1}{4}$, et si ce n'est pas le cas, la position du transducteur est par exemple modifiée d'une quantité égale à la différence des parcours, pour retrouver les mêmes conditions. Une solution selon la figure 3 a notamment comme avantage d'être très compacte et donc très peu encombrante.

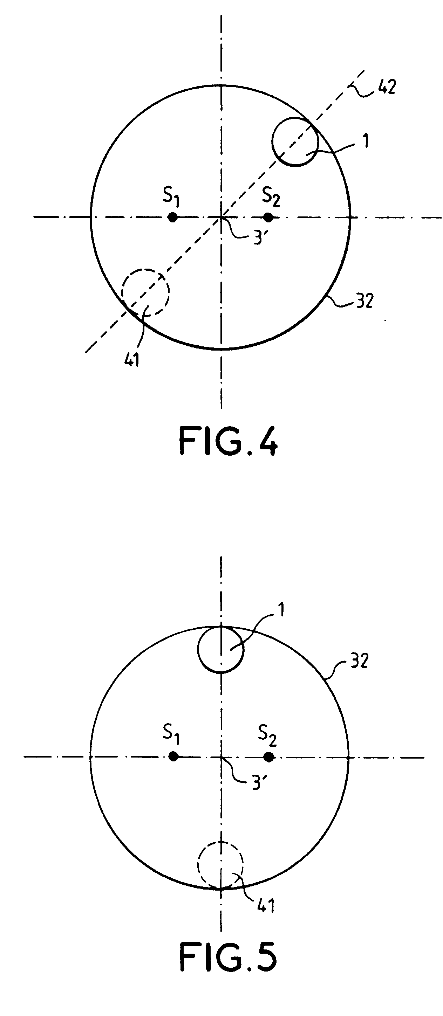

Comme le montrent les figures 4 et 5, il est possible d'utiliser un deuxième transducteur 41 disposé par exemple symétriquement du premier transducteur 1 par rapport au centre 3' de l'antenne. Ce deuxième transducteur 41 est par ailleurs par exemple situé à une distance du récepteur qui diffère de λ/8 de la distance 21' du premier transducteur 1 au récepteur. Le deuxième transducteur est par exemple commandé de la même façon et avec les mêmes circuits que le premier transducteur. En se référant à la figure 2, il apparaît alors que la mise en service de l'un ou l'autre des transducteurs permet de générer un signal de test dont l'écart d'amplitude par rapport à l'optimum, situé à une annulation 23 de la valeur moyenne du signal de test, sera au maximum de 3dB, ce qui est suffisant dans le cas d'une application d'auto-test par exemple. Cela a l'avantage de ne pas nécessiter de réglage mécanique sur des produits de série, notamment de la position d'un transducteur par rapport à un récepteur. Le faible coût d'un transducteur rend encore économiquement valable cette solution.

La figure 4 et la figure 5 présentent à titre d'exemple une vue en coupe du système de la figure 3. La figure 4 illustre le cas d'une antenne de radar monopulse à deux éléments S1 et S2 où les voies somme et différence sont réalisées par des combinaisons de signaux hyperfréquences et où le transducteur 1 est placé sur une bissectrice 42 par rapport à deux axes, l'un passant par les deux éléments S1 et S2, l'autre étant la médiatrice du segment S1S2 des deux éléments, de façon à générer un signal important sur les voies somme et différence. En cas d'utilisation d'un deuxième transducteur 41, ce dernier est situé symétriquement au premier par rapport au centre de l'antenne 3'.

La figure 5 présente le cas d'une antenne de radar monopulse constituée de deux éléments S1 et S2, où les voies somme et différence sont réalisées par calcul après démodulation. Le transducteur 1 est placé sur la médiatrice du segment S1S2 des deux éléments. Dans ce cas un auto-test étant par exemple destiné à compenser les dérives des voies d'émission et de réception associées à S1 et S2, les distances du transducteur 1 par rapport aux deux éléments de l'antenne sont par exemple égales de façon à ce que les signaux de test aient des caractéristiques équivalentes. En cas d'utilisation d'un deuxième transducteur 41, ce dernier est situé symétriquement au premier par rapport au centre de l'antenne 3'.

Le transducteur 1 et éventuellement le deuxième 41 peuvent encore être par exemple placés dans un boîtier contenant les circuits d'émission et de réception à un endroit dépendant de la géométrie du circuit, de façon à assurer un couplage entre la source hyperfréquence et les circuits de réception. Un tel positionnement d'un transducteur permet encore une réalisation compacte.

Les transducteurs utilisés peuvent être par exemple du type sonore piézo-électrique comparable à celui utilisé dans beaucoup d'appareils de grande consommation tels que par exemple des montres, des réveils ou des ordinateurs personnel. Ils peuvent par exemple être encore du type haut-parleur miniature à membrane métallisée.

L'invention s'applique à des radars à saut de fréquence qu'ils soient monovoie ou du type monopulse. Elle peut encore par exemple être appliquée à un radar à rampe de fréquence. Enfin son faible coût de réalisation, ainsi que son très faible encombrement mais aussi ses faibles exigences possibles en matière de réglage font qu'elle est particulièrement bien adaptée pour une application à des véhicules automobiles.

## Revendications

1. Dispositif d'auto-test d'un radar, caractérisé en ce qu'il comporte au moins un transducteur (1) inséré dans le champ de rayonnement de l'émission hyperfréquence (2) qui intercepte une partie de l'énergie rayonnée et la renvoie vers le récepteur de façon à créer dans le récepteur un signal modulé par les battements du transducteur (1), le signal de test étant ce signal modulé, et des moyens (7, 13) pour exciter le transducteur (1) en synchronisme avec un sous-multiple de la fréquence d'échantillonnage (Fe) d'un signal de réception.

2. Dispositif selon la revendication 1, caractérisé en ce que le transducteur (1) est placé de telle façon que le récepteur fournisse un signal de test dont la valeur moyenne est voisine de zéro.

3. Dispositif selon la revendication 2, caractérisé en ce que le transducteur est sensiblement à une distance inférieure à la longueur d'onde hyperfréquence divisée par huit d'une position correspondant à une annulation du signal de test.

4. Dispositif selon l'une quelconque des revendications précédentes, caractérisé en ce qu'il comporte des moyens (14) de post-intégration effectuant une moyenne des signaux de test après traitement par transformation de Fourier rapide (12) de ces derniers, la moyenne étant effectué sur un nombre donné de récurrences d'analyse radar, un auto-test étant basé sur l'information fournie par les moyens de post-intégration.

5. Dispositif selon l'une quelconque des revendications précédentes, caractérisé en ce que le transducteur (1) est placé à l'intérieur de l'antenne (31) du radar.

6. Dispositif selon la revendication 5, caractérisé en ce que la source d'émission (3) étant à l'entrée d'un cylindre métallique (32) ouvert par exemple sur le coté opposé, le transducteur (1) est placé le plus près possible de l'enveloppe intérieure du cylindre (32).

7. Dispositif selon l'une quelconque des revendications 5 ou 6, caractérisé en ce que l'antenne (31) étant monopulse à deux éléments (S1, S2), le transducteur (1) est placé sur une bissectrice (42) par rapport à deux axes, l'un passant par les deux éléments S1 et S2, l'autre étant la médiatrice du segment des deux éléments (S1S2).

8. Dispositif selon l'une quelconque des revendications 5 ou 6, caractérisé en ce que l'antenne (31) étant monopulse à deux éléments (S1,S2), le transducteur (1) est placé sur la médiatrice du segment des deux éléments (S1S2).

9. Dispositif selon l'une quelconque des revendications 1 à 4, caractérisé en ce que le transducteur (1) est placé dans un boîtier contenant les fonctions d'émission et de réception.

10. Dispositif selon l'une quelconque des revendications précédentes, caractérisé en ce que comportant un deuxième transducteur(41), celui-ci est placé de telle sorte que sa distance au récepteur diffère de la longueur d'onde de l'onde hyperfréquence divisée par huit ($\lambda$/8) par rapport à la distance du premier transducteur (1) au récepteur.

11. Dispositif selon l'une quelconque des revendications précédentes, caractérisé en ce que comportant un deuxième transducteur (41), celui-ci est placé symétriquement du premier transducteur (1) par rapport au centre (3') de l'antenne.

12. Dispositif selon l'une quelconque des revendications précédentes, caractérisé en ce que le transducteur (1,41) est sonore.

13. Dispositif selon l'une quelconque des revendications précédentes, caractérisé en ce que le transducteur (1,41) est du type piézo-électrique.

14. Dispositif selon l'une quelconque des revendications 1 à 12, caractérisé en ce que le transducteur (1, 14) est du type électromagnétique.

# FIG.1

EP 0 872 740 A1

FIG.2

FIG.3

FIG.4

FIG.5

8

Office européen
des brevets

**RAPPORT DE RECHERCHE EUROPEENNE**

Numéro de la demande

EP 98 40 0914

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 018, no. 189 (P-1721), 31 mars 1994 & JP 06 003171 A (FUJI ELECTRIC CO LTD), 11 janvier 1994, * abrégé * | 1,5, 12-14 | G01S13/34 G01S7/40 |
| A | PATENT ABSTRACTS OF JAPAN vol. 097, no. 008, 29 août 1997 & JP 09 101145 A (NIKON CORP), 15 avril 1997, * abrégé * | 1 | |
| A | US 4 656 481 A (MAWHINNEY DANIEL D) 7 avril 1987 * le document en entier * | 12,13 | |
| A | US 3 935 573 A (JOHNSON HENRY CHARLES) 27 janvier 1976 * le document en entier * | 14 | |
| A | WO 95 04943 A (VORAD SAFETY SYSTEMS INC) 16 février 1995 * le document en entier * | 7,8 | **DOMAINES TECHNIQUES RECHERCHES (Int.Cl.6)** G01S |

Le présent rapport a été établi pour toutes les revendications

| Lieu de la recherche | Date d'achèvement de la recherche | Examinateur |
|---|---|---|
| LA HAYE | 27 juillet 1998 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant